# EUROPEAN PATENT SPECIFICATION

(11) **EP 3 609 671 B1**
(45) Date of publication and mention of the grant of the patent: **25.08.2021**
(21) Application number: 18704290.8
(22) Date of filing: 30.01.2018
(51) Int. Cl.: B29C 45/26, B29C 33/00, B29K 23/00, B01L 3/00, B29L 7/00, B29L 31/00

(54) **MOULDING METHOD AND APPARATUS**
FORMVERFAHREN UND VORRICHTUNG
PROCÉDÉ ET APPAREIL DE MOULAGE

(30) Priority: 10.04.2017 GB 201705760
(43) Date of publication of application: 19.02.2020
(73) Proprietor: Abgene Ltd, Ashford, Kent TN232 4FD (GB)
(72) Inventor: SIMS, Daniel, Ashford Kent TN23 4FD (GB); HARRISON, Clive, Ashford Kent TN23 4FD (GB); PRYCE, Peter, Ashford Kent TN23 4FD (GB)
(74) Representative: HGF
(86) International application number: PCT/GB2018/050264
(87) International publication number: WO 2018/189504

(56) References cited:
- CN-A- 103 991 165
- GB-A- 2 453 432
- JP-A- 2007 245 595
- US-A1- 2005 173 846

## Description

### FIELD OF THE INVENTION

This invention relates to a moulding tool and method for forming a polypropylene PCR plate comprising a channel, a main body and an overflow area; wherein the channel is configured to facilitate the introduction of molten plastics material into the main body and wherein the main body is configured to facilitate the flow of the said molten plastics into the overflow area once the main body of the moulding tool has been filled with the said molten plastics.

### BACKGROUND OF THE INVENTION

Current injection moulding apparatus and methods involve molten plastics material being injected into a mould (also called a mould tool or simply tool) from one or more nozzles through one or more channels in the mould called runners. The molten plastics material flows through the one or more runners into the main body of the mould. Once the entire volume of the mould is filled the one or more nozzles will cease injecting the molten plastics material into the one or more runners and thus into the main body of the mould and the mould will usually at that stage be opened (either automatically or manually) to eject the moulded part from the main body of the mould and the mouldings from the one or more runners from the mould.

The problem with using this method and moulding apparatus for the mouldings of plastics materials for use in products which have sections of varying thickness, such as PCR plates, is that air can become trapped in the plastics material, flow is not always consistent from thicker areas of plastics material to thinner areas of plastics material and the finished moulded plastics material products are not always flat, which can lead to a substantial scrappaged of finished moulded plastics material products.

GB2453432 discloses a vessel for thermal cycling applications. The vessel is formed from a thermoplastic material such as polypropylene and comprises at least one well for containing a sample. The well comprises an upper wall portion, an intermediate wall portion, a lower wall portion, and a bottom. The lower wall portion corresponds to the region of the well intended to contain, in use, a sample, wherein the wall thickness of the lower wall portion is less than the wall thickness of the intermediate wall portion and wherein the wall thickness of the lower wall portion is between about 0.06mm and about 0.17mm.

CN103991165 provides an injection moulding method of a PCR plate. The injection moulding method of the PCR plate comprises the following steps: A, preparing a PCR plate frame; B, forming a PCR plate cavity in a moulding die, enabling the PCR plate cavity to form a PCR plate frame cavity, a connection plate cavity and a plurality of reaction tube cavities, and putting the prepared PCR plate frame into the PCR plate frame cavity; C, injecting molten plastic raw material into the PCR plate cavity through the connection plate cavity to form the PCR plate, wherein a water opening of the prepared PCR plate is formed in the inner side of a connection plate; water openings are formed in reaction tubes. The reaction tubes are smooth and neat in surface, stable in size, excellent in light transmission effect and the reaction conditions of samples in the reaction tubes can be well observed and thus the detection effect of the product is improved; meanwhile, the die has few plastic inlets, so that the structure of the die is simplified, providing a high production efficiency; the product has few water openings, so that the production cost is low, and raw material is saved.

JP2007245595 provides a mould capable of manufacturing a plastic product of good quality, containing few air bubbles, when the plastic product is manufactured by a liquid injection moulding method. It discloses a mould equipped with a stationary mould and a movable mould, and an overflow catcher part is provided on at least either of the mutually opposed surfaces of the stationary mould and the movable mould in such a manner as to communicate with a gas bent of the mould and a cavity of a moulded article.

### SUMMARY OF THE INVENTION

According to a first aspect of the invention there is provided a mould tool configured to form a polypropylene PCR plate comprising a channel, a main body and an overflow area. The channel is configured to facilitate the introduction of molten polypropylene plastics material into the main body, and the main body is configured to facilitate the flow of the said molten polypropylene plastics into the overflow area once the main body of the mould tool has been filled with the said molten polypropylene plastics. The main body is open only to the channel and the overflow area, wherein the overflow area is only open to the main body such that the only entrance/exit to the mould tool is via the channel, wherein the main body of the mould tool comprises portions configured to create thick areas and thin areas in the said polypropylene PCR plate. The main body is configured to facilitate the flow of the said molten polypropylene plastics material from the portions configured to create thin areas in the said polypropylene PCR plate through an exit point that would form the bottom of wells of said polypropylene PCR plate into the overflow area.

This is advantageous since the flow pattern from thick to thin areas is improved and any air that may be trapped in the molten plastics material is forced into the overflow area rather than remaining in the main body of the mould. This results in the finished moulded plastic product being flatter and without air bubbles, which in turn results in a reduction in plastic product that needs to be scrapped. The main body of the mould tool comprises portions configured to create thick areas and thin areas in the said polypropylene PCR plate.

Preferably the mould tool is configured for standard injection moulding techniques. This is advantageous as the mould can be simply used in standard injection moulding appliances without the need for additional specialised equipment.

Preferably the channel is configured to facilitate the introduction of only molten polypropylene plastics material into the main body of the mould tool.

Preferably the thick areas are in the range of 0.90mm to 1 .50mm.

Preferably the thin areas are in the range of 0.15mm to 0.30mm.

Preferably the channel is configured to facilitate the introduction of molten polypropylene plastics material into the portions configured to create thick areas in the said polypropylene PCR plate of the main body.

Preferably the main body is configured to facilitate the flow of the said molten polypropylene plastics material from the portions configured to create thick areas in the said polypropylene PCR plate into the portions configured to create thin areas in the said polypropylene PCR plate.

Preferably the main body is configured to facilitate the flow of the said molten polypropylene plastics material from the portions configured to create thin areas in the said polypropylene PCR plate into the overflow area.

Preferably the overflow area is configured to create a scrap product.

Preferably the channel is configured to create a scrap product.

Preferably the main body is configured to create the said plastics product.

Preferably the overflow area is configured to create a scrap product which is of greater thickness than the portions of the main body configured to create thin areas in the said polypropylene PCR plate.

Preferably the mould tool is configured to form a 24 well PCR plate.

Preferably the mould tool is configured to form a 32 well PCR plate.

Preferably the mould tool is configured to form a 48 well PCR plate.

Preferably the mould tool is configured to form a 96 well PCR plate.

Preferably the mould tool is configured to form a 384 well PCR plate.

Preferably the portions of the main body that are configured to create thick areas in the said plastics product are configured to create the deck of the said PCR plate.

Preferably the portions of the main body that are configured to create thick areas in the said plastics product are configured to create the deck and skirt of the said PCR plate.

Preferably the portions of the main body that are configured to create thin areas in the said plastics product are configured to create the wells of the said PCR plate.

Preferably the main body is configured to facilitate the flow of the said molten polypropylene plastics material from the portions configured to create the bottoms of the wells in the said PCR plate into the overflow area.

According to a second aspect of the present invention there is provided a method of injection moulding a polypropylene PCR plate comprising the steps of
a) providing a mould tool as described in relation to the first aspect of the invention;
b) introducing molten polypropylene plastics material into the main body of the mould tool through the channel, such that once the main body of the mould tool is filled, the molten polypropylene plastics material is configured to fill the overflow area;
c) ejecting the polypropylene PCR plate from the mould along with the moulding of the channel and the overflow area;
d) discarding the moulding of the channel and the overflow area.

Preferably the injection moulding is standard injection moulding. This is advantageous as the method can be simply used in standard injection moulding appliances without the need for additional specialised equipment.

Preferably only molten polypropylene plastics material is introduced into the mould tool during the moulding process.

Preferably the mould is not put under external pressure.

### BRIEF DESCRIPTION OF THE DRAWINGS

Other aspects and features of the present invention will become apparent to those ordinarily skilled in the art upon review of the following description of specific embodiments of the invention in conjunction with the accompanying figures.
Figure 1 illustrates a typical injection mould press;
Figure 2 illustrates a close up cross-sectional view of a portion of the mould tool in a closed position;
Figure 3 illustrates a cross-sectional view of a portion of the mould tool in an open position;
Figures 4 illustrates plan views of examples of the moulded plastics product and the scrap products; and
Figures 5 illustrates perspective views of examples of the moulded plastics product and the scrap products.

### DETAILED DESCRIPTION OF PREFERRED EMBODIMENTS

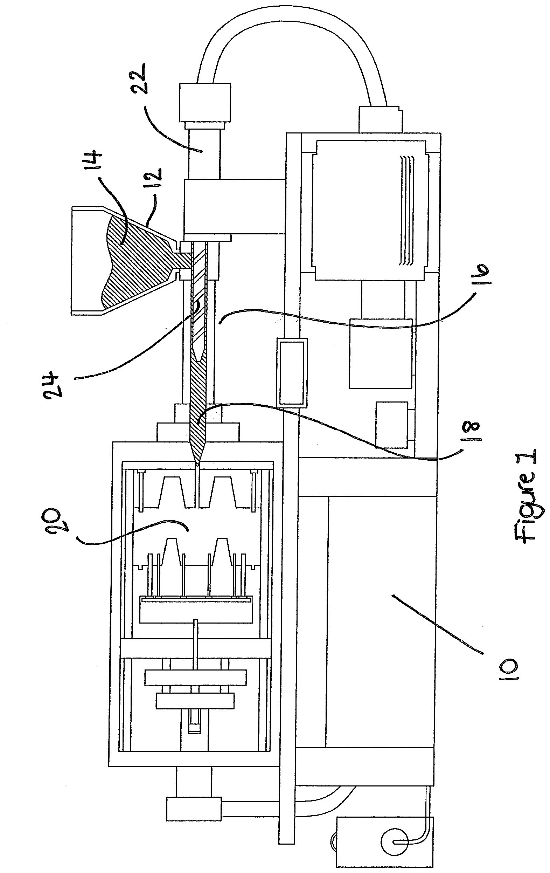

Figure1 illustrates a typical injection moulding assembly 10, which is known as an injection mould press 10. The mould tool 20 is mounted in such an injection mould press 10. Solid plastics material 14 is held in a hopper 12, and fed into a heated barrel 16 and mixed to form a molten plastics material 18 before being forced into the mould tool 20. The solid/molten plastics material 14, 18 is mixed in the heated barrel 16 typically using a rotating screw thread 24. The molten plastics material 18 is typically forced into the mould tool 20 by a pressing ram 22 which may be hydraulically operated. The injection mould press may comprises more than one hopper 12, if different plastics materials need to be fed into the mould tool 20, either together or sequentially. The injection mould press 10 may have one or more heated barrels 16 or into the alternative the heated barrel 16 may split into a plurality of heated barrels.

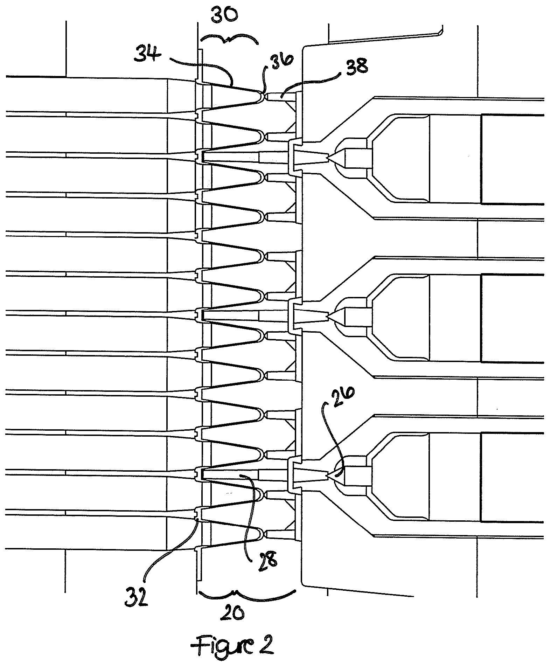

Figure 2 illustrates a close up cross-sectional view of a portion of the injection mould press 10 with the mould tool 20 in a closed position. Figure 2 illustrates where the heated barrel 16 terminates in a nozzle 26 inside the mould tool 20. Mould tool 20 comprises a channel 28, a main body 30 and an overflow area 38. Molten plastics material 18 leaves the heated barrel 16 via nozzle 26 and is injected into the mould tool 20 through channel 28. Once channel 28 is filled with molten plastics material 18 the molten plastics material 18 continues to be forced into the main body 30 of the mould tool 20. In the embodiment illustrated the mould tool 20 is for forming a PCR plate. A typical PCR plate comprises a deck portion and a plurality of wells, the PCR plate may optionally comprise a skirt portion which may be a full skirt or a semi or half skirt if present. The deck portion and the skirt portion if present are of much greater thickness of plastics material than the plurality of wells. The mould tool therefore needs to have portions for creating the thicker deck portion and skirt portion if present and portions for creating the thinner wells. Typically once the molten plastics material 18 has been injected into channel 28 the molten plastics material 18 is first forced into the thicker areas 32 of the main body 30 of the mould tool 20, which in the case of a PCR plate mould are the areas that form the deck portion. Once the thicker areas 32 of the main body 30 of the mould tool 20 are filled with molten plastics material 18, the molten plastics material 18 is then forced from the thicker areas 32 of the main body 30 of the mould tool 20 into the thinner areas 34 of the main body 30 of the mould tool 20, which in the case of a PCR plate mould are the areas that form the wells. In a traditional injection moulding process this is where the procedure would then stop and the finished plastics product would be ejected from the mould. However, in the case of the present invention the procedure continues such that once the thinner areas 34 of the main body 30 of the mould tool 20 are filled with molten plastics material 18, the molten plastics material 18 is then forced from the thinner areas 34 of the main body 30 of the mould tool 20 through an exit point 36, which in the case of a PCR plate mould is the point that form the bottoms of the wells, into overflow area 38. Overflow area 38 and channel 28 are configured to produce scrap products of similar thickness to each other such the complete flow of molten plastics material is from a substantially thick area being channel 28, to a thinner area 32 which in the case of a PCR plate would form the deck, to a substantially thinner area 34 which in the case of a PCR plate would form the wells, finally to a further substantially thick area being overflow area 38. The mould tool 20 comprising a final substantially thick area being overflow area 38 allows for any air trapped in the molten plastics material to be forced into this final area rather than remaining in the moulding of the plastics product, in addition the plastic flow pattern is improved flowing from thick to thin areas as there is this final thick area after the very thin area.

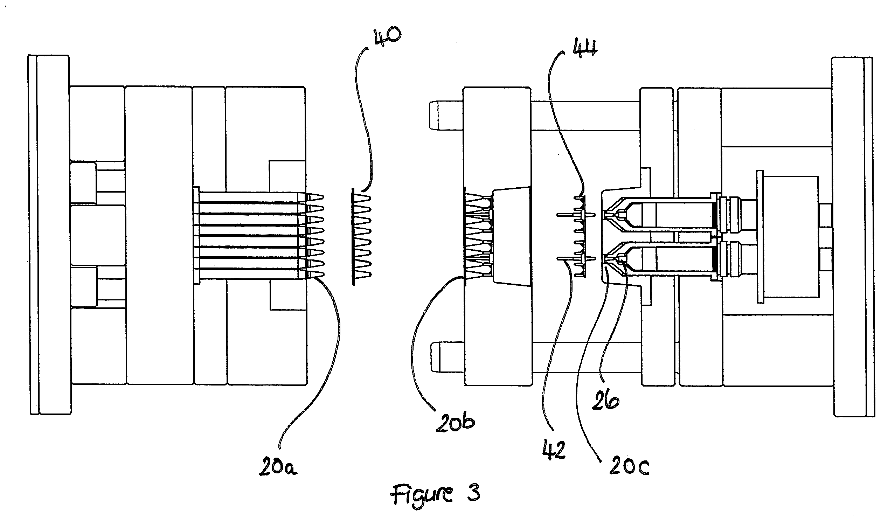

Figure 3 illustrates a cross-sectional view of a portion of the mould tool 20 in an open position. As can be seen in Figure 3 the mould tool 20 comprises three physical portions 20a, 20b and 20c which when connected together create void spaces which comprise channel 28, main body 30 and overflow area 38. Whilst in the embodiment illustrated the mould tool 20 comprises three physical portions 20a, 20b and 20c, in an alternate embodiment may comprise less than or more than three physical portions, depending on the complexity of the mould tool 20 and the product to be moulded. In the embodiment illustrated for ease of processing, the plastics product being moulded 40 is configured to eject from one side of the mould tool 20 between physical portions 20a and 20b of the mould tool 20, whilst the scrap products 42, 44 being the mouldings from the channel 28 and overflow area 38 respectively are configured to eject from the other side of the mould tool 20 between physical portions 20b and 20c of the mould tool. This enables ejected mouldings to be sorted into keeping and scrapping bins without additional user input.

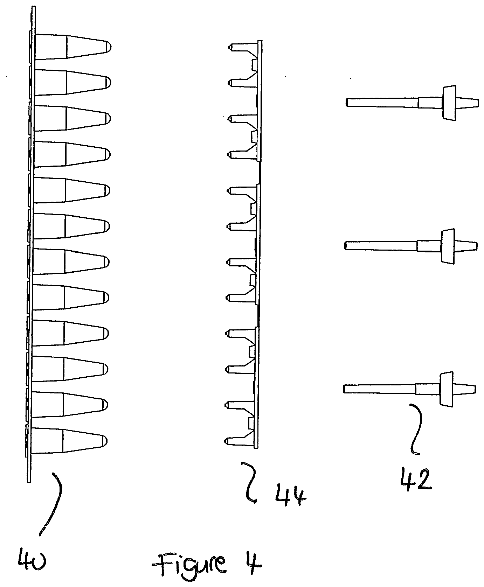

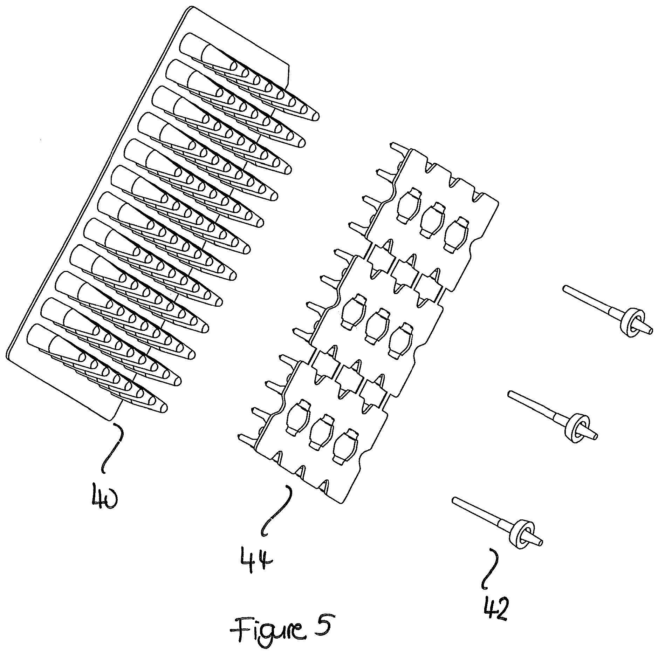

Figures 4 and 5 illustrate examples of the moulded plastics product 40 and the scrap products 42, 44 being the mouldings from the channel 28 and overflow area 38 respectively.

## Claims

1. A mould tool (20) configured to form a polypropylene PCR plate (40) comprising a channel (28), a main body (30) and an overflow area (38);
wherein the channel (28) is configured to facilitate the introduction of molten polypropylene plastics material into the main body (30) and wherein the main body (30) is configured to facilitate the flow of the said molten polypropylene plastics into the overflow area (38) once the main body (30) of the mould tool has been filled with the said molten polypropylene plastics;
wherein the main body (30) is open only to the channel {28) and the overflow area (38), wherein the overflow area (38) is only open to the main body (30) such that the only entrance/exit to the mould tool is via the channel (28), wherein the main body (30) of the mould tool comprises portions configured to create thick areas (32) and thin areas (34) in the said polypropylene PCR plate (40); and
wherein the main body (30) is configured to facilitate the flow of the said molten polypropylene plastics material from the portions configured to create thin areas (34) in the said polypropylene PCR plate (40) through an exit point (36) that would form the bottom of wells of said polypropylene PCR plate (40) into the overflow area (38).

2. A mould tool (20) as claimed in Claim 1 wherein the channel (28) is configured to facilitate the introduction of only molten polypropylene plastics material into the main body (30) of the mould tool.

3. A mould tool (20) as claimed in any preceding claim wherein the thick areas (32) are in the range of 0.90mm to 1.50mm.

4. A mould tool (20) as claimed in any preceding claim wherein the thin areas (34) are in the range of 0.15mm to 0.30mm.

5. A mould tool (20) as claimed in any preceding claim wherein the channel (28) is configured to facilitate the introduction of molten polypropylene plastics material into the portions configured to create thick areas (32) in the said polypropylene PCR plate (40) of the main body (30).

6. A mould tool (20) as claimed in any preceding claim wherein the main body (30) is configured to facilitate the flow of the said molten polypropylene plastics material from the portions configured to create thick areas (32) in the said polypropylene PCR plate (40) into the portions configured to create thin areas (34) in the said polypropylene PCR plate (40).

7. A mould tool (20) as claimed in any preceding claim wherein the overflow area (38) is configured to create a scrap product (44), optionally wherein the overflow area (38) is configured to create a scrap product (44) which is of greater thickness than the portions of the main body configured to create thin areas (34) in the said polypropylene PCR plate (40); and/or
wherein the channel (28) is configured to create a scrap product (42).

8. A mould tool (20) as claimed in any preceding claim wherein the main body (30) is configured to create the said polypropylene PCR plate (40).

9. A mould tool (20) as claimed in any preceding claim wherein the mould tool (20) is configured to form a 24 well PCR plate, a 32 well PCR plate, a 48 well PCR plate, a 96 well PCR plate, or a 384 well PCR plate.

10. A mould tool (20) as claimed in any preceding claim wherein the portions of the main body that are configured to create thick areas (32) in the said polypropylene PCR plate are configured to create the deck or deck and skirt of the said PCR plate; and/or
wherein the portions of the main body that are configured to create thin areas (34) in the said plastics product are configured to create the wells of the said PCR plate.

11. A mould tool (20) as claimed in any preceding claim wherein the main body (30) is configured to facilitate the flow of the said molten plastics material from the portions configured to create the bottoms of the wells in the said PCR plate into the overflow area (38).

12. A method of injection moulding a polypropylene PCR plate (40) comprising the steps of
a) providing a mould tool (20) as claimed in any of claims 1 to 11;
b) introducing molten polypropylene plastics material into the main body (30) of the mould tool through the channel (28), such that once the main body (30) of the mould tool is filled, the molten polypropylene plastics material is configured to fill the overflow area (36);
c) ejecting the polypropylene PCR plate (40) from the mould along with the moulding of the channel and the overflow area (42, 44);
d) discarding the moulding of the channel and the overflow area (42, 44).

13. A method as claimed in Claim 12 wherein only molten polypropylene plastics material is introduced into the mould tool during the moulding process.

14. A method as claimed in Claim 12 or claim 13 wherein the mould is not put under external pressure.

15. A method as claimed in any of Claims 12 to 14, wherein the injection moulding is standard injection moulding.

## Patentansprüche

1. Formwerkzeug (20), das konfiguriert ist, um eine Polypropylen-PCR-Platte (40) auszubilden, das einen Kanal (28), einen Hauptkörper (30) und eine Überlaufregion (38) umfasst;
wobei der Kanal (28) konfiguriert ist, um die Einbringung von geschmolzenem Polypropylenkunststoffmaterial in den Hauptkörper (30) zu ermöglichen, und wobei der Hauptkörper (30) konfiguriert ist, um den Fluss der geschmolzenen Polypropylenkunststoffe in die Überlaufregion (38) zu ermöglichen, sobald der Hauptkörper (30) des Formwerkzeugs mit den geschmolzenen Polypropylenkunststoffen gefüllt worden ist;
wobei der Hauptkörper (30) nur zu dem Kanal (28) und der Überlaufregion (38) hin offen ist, wobei die Überlaufregion (38) nur zu dem Hauptkörper (30) hin derart offen ist, dass der einzige Eingang/Ausgang zu dem Formwerkzeug über den Kanal (28) erfolgt, wobei der Hauptkörper (30) des Formwerkzeugs Abschnitte umfasst, die konfiguriert sind, um dicke Regionen (32) und dünne Regionen (34) in der Polypropylen-PCR-Platte (40) zu erzeugen; und
wobei der Hauptkörper (30) konfiguriert ist, um den Fluss des geschmolzenen Polypropylenkunststoffmaterials aus den Abschnitten, die konfiguriert sind, um dünne Regionen (34) in der Polypropylen-PCR-Platte (40) zu erzeugen, durch einen Ausgangspunkt (36), der den Boden der Wells der Polypropylen-PCR-Platte (40) ausbilden würde, in die Überlaufregion (38) zu ermöglichen.

2. Formwerkzeug (20) nach Anspruch 1, wobei der Kanal (28) konfiguriert ist, um die Einbringung von nur geschmolzenem Polypropylenkunststoffmaterial in den Hauptkörper (30) des Formwerkzeugs zu ermöglichen.

3. Formwerkzeug (20) nach einem der vorhergehenden Ansprüche, wobei die dicken Regionen (32) in dem Bereich von 0,90 mm bis 1,50 mm liegen.

4. Formwerkzeug (20) nach einem der vorhergehenden Ansprüche, wobei die dünnen Regionen (34) in dem Bereich von 0,15 mm bis 0,30 mm liegen.

5. Formwerkzeug (20) nach einem der vorhergehenden Ansprüche, wobei der Kanal (28) konfiguriert ist, um die Einbringung von geschmolzenem Polypropylenkunststoffmaterial in die Abschnitte zu ermöglichen, die konfiguriert sind, um dicke Regionen (32) in der Polypropylen-PCR-Platte (40) des Hauptkörpers (30) zu erzeugen.

6. Formwerkzeug (20) nach einem der vorhergehenden Ansprüche, wobei der Hauptkörper (30) konfiguriert ist, um den Fluss des geschmolzenen Polypropylenkunststoffmaterials aus den Abschnitten, die konfiguriert sind, um dicke Regionen (32) in der Polypropylen-PCR-Platte (40) zu erzeugen, in die Abschnitte zu ermöglichen, die konfiguriert sind, um dünne Regionen (34) in der Polypropylen-PCR-Platte (40) zu erzeugen.

7. Formwerkzeug (20) nach einem der vorhergehenden Ansprüche, wobei die Überlaufregion (38) konfiguriert ist, um ein Ausschussprodukt (44) zu erzeugen, optional wobei die Überlaufregion (38) konfiguriert ist, um ein Ausschussprodukt (44) zu erzeugen, das eine größere Dicke als die Abschnitte des Hauptkörpers besitzt, die konfiguriert sind, um dünne Regionen (34) in der Polypropylen-PCR-Platte (40) zu erzeugen; und/oder
wobei der Kanal (28) konfiguriert ist, um ein Ausschussprodukt (42) zu erzeugen.

8. Formwerkzeug (20) nach einem der vorhergehenden Ansprüche, wobei der Hauptkörper (30) konfiguriert ist, um die Polypropylen-PCR-Platte (40) zu erzeugen.

9. Formwerkzeug (20) nach einem der vorhergehenden Ansprüche, wobei das Formwerkzeug (20) konfiguriert ist, um eine 24-Well-PCR-Platte, eine 32-Well-PCR-Platte, eine 48-Well-PCR-Platte, eine 96-Well-PCR-Platte oder eine 384-Well-PCR-Platte auszubilden.

10. Formwerkzeug (20) nach einem der vorhergehenden Ansprüche, wobei die Abschnitte des Hauptkörpers, die konfiguriert sind, um dicke Regionen (32) in der Polypropylen-PCR-Platte zu erzeugen, konfiguriert sind, um das Deck oder das Deck und den Stehrand der PCR-Platte zu erzeugen; und/oder
wobei die Abschnitte des Hauptkörpers, die konfiguriert sind, um dünne Regionen (34) in dem Kunststoffprodukt zu erzeugen, konfiguriert sind, um die Wells der PCR-Platte zu erzeugen.

11. Formwerkzeug (20) nach einem der vorhergehenden Ansprüche, wobei der Hauptkörper (30) konfiguriert ist, um den Fluss des geschmolzenen Kunststoffmaterials aus den Abschnitten, die konfiguriert sind, um die Böden der Wells in der PCR-Platte zu erzeugen, in die Überlaufregion (38) zu ermöglichen.

12. Verfahren zum Spritzgießen einer Polypropylen-PCR-Platte (40), das die folgenden Schritte umfasst:
a) Bereitstellen eines Formwerkzeugs (20) nach einem der Ansprüche 1 bis 11;
b) Einbringen von geschmolzenem Polypropylenkunststoffmaterial in den Hauptkörper (30) des Formwerkzeugs durch den Kanal (28), derart, dass, sobald der Hauptkörper (30) des Formwerkzeugs gefüllt ist, das geschmolzene Polypropylenkunststoffmaterial konfiguriert ist, um die Überlaufregion (36) zu füllen;
c) Auswerfen der Polypropylen-PCR-Platte (40) aus der Form zusammen mit dem Formteil des Kanals und der Überlaufregion (42, 44);
d) Verwerfen des Formteils des Kanals und der Überlaufregion (42, 44).

13. Verfahren nach Anspruch 12, wobei nur geschmolzenes Polypropylenkunststoffmaterial in das Formwerkzeug während des Formvorgangs eingebracht wird.

14. Verfahren nach Anspruch 12 oder 13, wobei die Form nicht unter äußeren Druck gesetzt wird.

15. Verfahren nach einem der Ansprüche 12 bis 14, wobei das Spritzgießen ein Standardspritzgießen ist.

## Revendications

1. Outil de moule (20) conçu pour former une plaque PCR en polypropylène (40) comprenant un canal (28), un corps principal (30) et une zone de trop-plein (38) ;
le canal (28) étant conçu pour faciliter l'introduction de matière de plastique polypropylène fondu dans le corps principal (30) et le corps principal (30) étant conçu pour faciliter l'écoulement dudit plastique polypropylène fondu dans la zone de trop-plein (38) une fois que le corps principal (30) de l'outil de moule a été rempli dudit plastique polypropylène fondu ;
le corps principal (30) étant ouvert uniquement vers le canal {28) et la zone de trop-plein (38), la zone de trop-plein (38) étant uniquement ouverte sur le corps principal (30) de telle sorte que la seule entrée/sortie vers l'outil de moule se fait par l'intermédiaire du canal (28), le corps principal (30) de l'outil de moule comprenant des parties conçues pour créer des zones épaisses (32) et des zones minces (34) dans ladite plaque PCR en polypropylène (40) ; et
le corps principal (30) étant conçu pour faciliter l'écoulement de ladite matière de plastique polypropylène fondu à partir des parties conçues pour créer des zones minces (34) dans ladite plaque PCR en polypropylène (40) à travers un point de sortie (36) qui formerait le fond de puits de ladite plaque PCR en polypropylène (40) dans la zone de trop-plein (38).

2. Outil de moule (20) selon la revendication 1, le canal (28) étant conçu pour faciliter l'introduction de la seule matière de plastique polypropylène fondu dans le corps principal (30) de l'outil de moule.

3. Outil de moule (20) selon l'une quelconque des revendications précédentes, les zones épaisses (32) étant dans la plage de 0,90 mm à 1,50 mm.

4. Outil de moule (20) selon l'une quelconque des revendications précédentes, les zones minces (34) étant dans la plage de 0,15 mm à 0,30 mm.

5. Outil de moule (20) selon l'une quelconque des revendications précédentes, le canal (28) étant conçu pour faciliter l'introduction de matière de plastique polypropylène fondu dans les parties conçues pour créer des zones épaisses (32) dans ladite plaque PCR en polypropylène (40) du corps principal (30).

6. Outil de moule (20) selon l'une quelconque des revendications précédentes, le corps principal (30) étant conçu pour faciliter l'écoulement de ladite matière de plastique polypropylène fondu à partir des parties conçues pour créer des zones épaisses (32) dans ladite plaque PCR en polypropylène (40) dans les parties conçues pour créer des zones minces (34) dans ladite plaque PCR en polypropylène (40).

7. Outil de moule (20) selon l'une quelconque des revendications précédentes, la zone de trop-plein (38) étant conçue pour créer un produit de rebut (44), éventuellement la zone de trop-plein (38) étant conçue pour créer un produit de rebut (44) qui est d'une épaisseur supérieure aux parties du corps principal conçues pour créer des zones minces (34) dans ladite plaque PCR en polypropylène (40) ; et/ou
le canal (28) étant conçu pour créer un produit de rebut (42).

8. Outil de moule (20) selon l'une quelconque des revendications précédentes, le corps principal (30) étant conçu pour créer ladite plaque PCR en polypropylène (40).

9. Outil de moule (20) selon l'une quelconque des revendications précédentes, l'outil de moule (20) étant conçu pour former une plaque PCR 24 puits, une plaque PCR 32 puits, une plaque PCR 48 puits, une plaque PCR 96 puits ou une plaque PCR 384 puits.

10. Outil de moule (20) selon l'une quelconque des revendications précédentes, les parties du corps principal qui sont conçues pour créer des zones épaisses (32) dans ladite plaque PCR en polypropylène étant conçues pour créer le pont ou le pont et la jupe de ladite plaque PCR ; et/ou
les parties du corps principal qui sont conçues pour créer des zones minces (34) dans ledit produit en plastique étant conçues pour créer les puits de ladite plaque PCR.

11. Outil de moule (20) selon l'une quelconque des revendications précédentes, le corps principal (30) étant conçu pour faciliter l'écoulement de ladite matière de plastique fondu à partir des parties conçues pour créer les fonds des puits dans ladite plaque PCR dans la zone de trop-plein (38).

12. Procédé de moulage par injection d'une plaque PCR en polypropylène (40) comprenant les étapes consistant à
a) fournir un outil de moule (20) selon l'une quelconque des revendications 1 à 11 ;
b) introduire une matière de plastique polypropylène fondu dans le corps principal (30) de l'outil de moule à travers le canal (28), de telle sorte qu'une fois que le corps principal (30) de l'outil de moule est rempli, la matière de plastique polypropylène fondu est conçue pour remplir la zone de trop-plein (36) ;
c) éjecter la plaque PCR en polypropylène (40) du moule avec le moulage du canal et de la zone de trop-plein (42, 44) ;
d) jeter le moulage du canal et la zone de trop-plein (42, 44).

13. Procédé selon la revendication 12, seule une matière de plastique polypropylène fondu étant introduite dans l'outil de moule pendant le processus de moulage.

14. Procédé selon la revendication 12 ou la revendication 13, le moule n'étant pas mis sous pression externe.

15. Procédé selon l'une quelconque des revendications 12 à 14, le moulage par injection étant un moulage par injection standard.
